# EUROPEAN PATENT SPECIFICATION

(11) **EP 2 064 092 B1**
(45) Date of publication and mention of the grant of the patent: **08.09.2010**
(21) Application number: 07748138.0
(22) Date of filing: 16.05.2007
(51) Int. Cl.: B60R 19/02

(54) **A BUMPER BEAM FOR A VEHICLE**
STOSSFÄNGERSTANGE FÜR EIN FAHRZEUG
POUTRE DE PARE-CHOCS DESTINEE A UN VEHICULE

(30) Priority: 18.05.2006 SE 0601107; 30.11.2006 SE 0602552
(43) Date of publication of application: 03.06.2009
(73) Proprietor: Gestamp HardTech AB, 971 25 Luleå (SE)
(72) Inventor: TANSKANEN, Michael, S-945 34 Rosvik (SE)
(74) Representative: Aslund, G Roland
(86) International application number: PCT/SE2007/000474
(87) International publication number: WO 2007/136319

(56) References cited:
- WO-A1-2006/002531
- SE-C2- 527 530
- US-A1- 2004 201 255

## Description

### Technical field

The present invention relates to a bumper beam for a vehicle in the form of a U-section with the profile open towards the vehicle, where the U-section has attachment portions with side flanges which form attachment surfaces for fastening to the vehicle. A similar device is for example known from SE 527 530 C2.

### Object and brief description of the invention

It is an object of the invention to achieve good deformation properties for a bumper beam and particularly, but not exclusively, in cases where the height of the vehicle's attachment portions does not correspond to the desired height of the bumper beam. The invention is **characterised in that** the height of the profile decreases from the attachment portions towards the middle, and the side flanges on at least one side of the profile change, towards the middle of the beam, to a small U-section open towards the vehicle. -

### Brief description of the drawings

The drawings depict by way of examples two embodiments of the invention.
**Figure 1** is a view of a first embodiment as seen from above.
**Figure 2** is a front view of the same embodiment.
**Figures 3-10** are cross-sections along the lines 3 to 10 in Figure 2.
**Figures 11-18** are cross-sections corresponding to the cross-sections 3-10 but depicting another embodiment somewhat modified relative to the above.

### Description of the illustrated and preferred embodiments

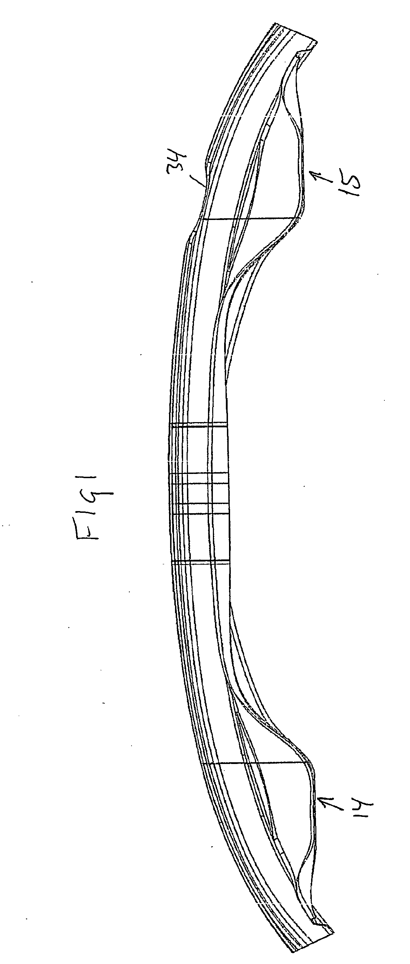

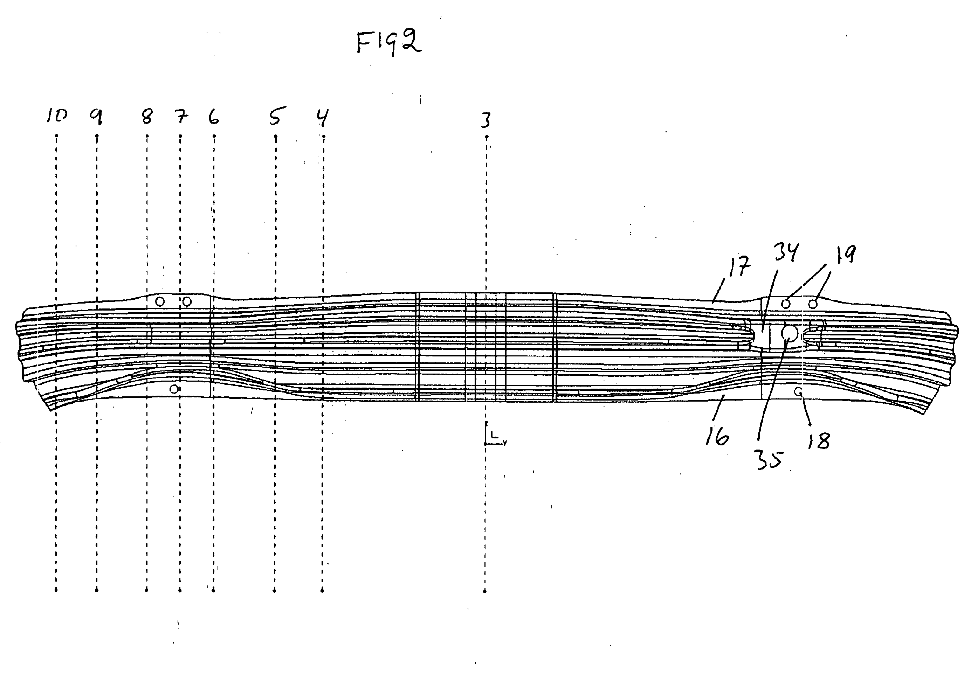

The bumper beam depicted in Figures 1-10 is made of steel. It may with advantage be made of hardenable steel plate which is hot-formed and hardened in one step in the so-called "press-hardening" process. The steel is of high strength and may have a yield point over 900 MPa (N/mm²), e.g. over 1100 or over 1200 MPa.

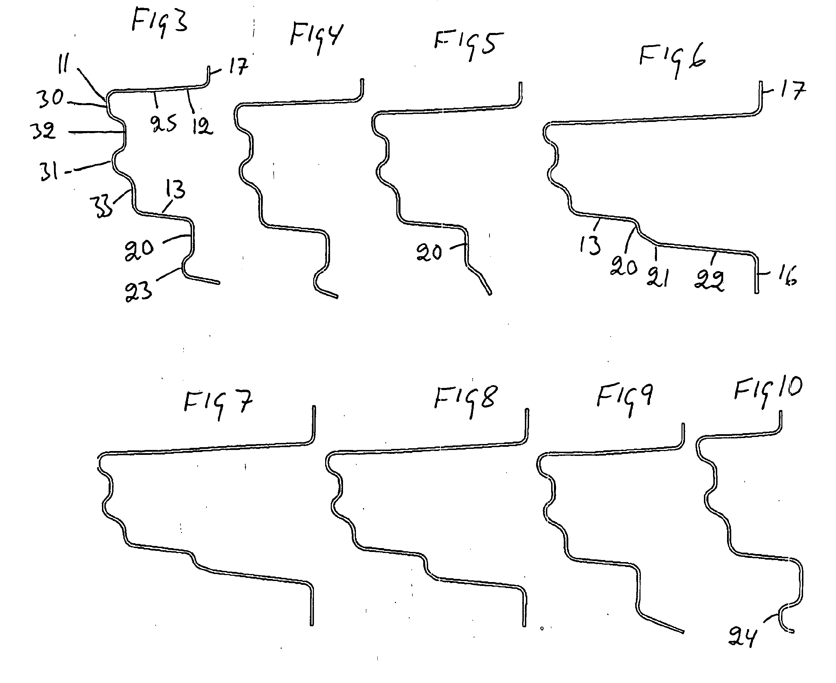

The bumper beam has a generally U-shaped profile with a central flange 11 and two webs 12, 13, as best illustrated in Figure 6. The beam has two attachment portions 14,15 where the U-profile has side flanges 16,17 which have holes 18 and 19 respectively for fastening by bolts and nuts to loadbearing elements of the vehicle. The profile has its greatest depth at the attachment portions and a lower depth at the middle portion of the beam. The web 13 has an indentation or step 20 which constitutes a deformation trigger 21. The width of the central flange 11 increases asymmetrically in the vertical direction towards the middle of the beam while at the same time the height of the web decreases. The side flange 17 extends along the whole beam. The web 12 has a deformation trigger along its whole length in the form of a slight angle change 25.

The side flange 16 and the outer portion 22 of the web 13 are transformed at the transition from the attachment portions to form a secondary small U-profile 23 beyond the indentation 20, as may be seen in Figures 3 and 4. The indentation 20 has at the same time become larger. Figures 4 and 5 illustrate transitional profiles between the profiles in Figure 6 and Figure 3.

Towards each end of the beam, the side flange 16 and the outer portion 22 of the web 13 also change to a secondary small U-profile 24 open inwards towards the vehicle, as illustrated in Figure 10.

The U-profiles 23,24 provide reinforcement adapted to low impacts.

The central flange has longitudinal ridges 30,31 and lower portions 32,33, and at the fastening portion 15 it has a concavity 34 and a hole 35. A towing lug can be bolted securely to the vehicle's loadbearing element via the hole 35.

The beam is particularly suited to deforming advantageously in response to various kinds of impact, both low impacts and high impacts and both barrier impacts and offset impacts.

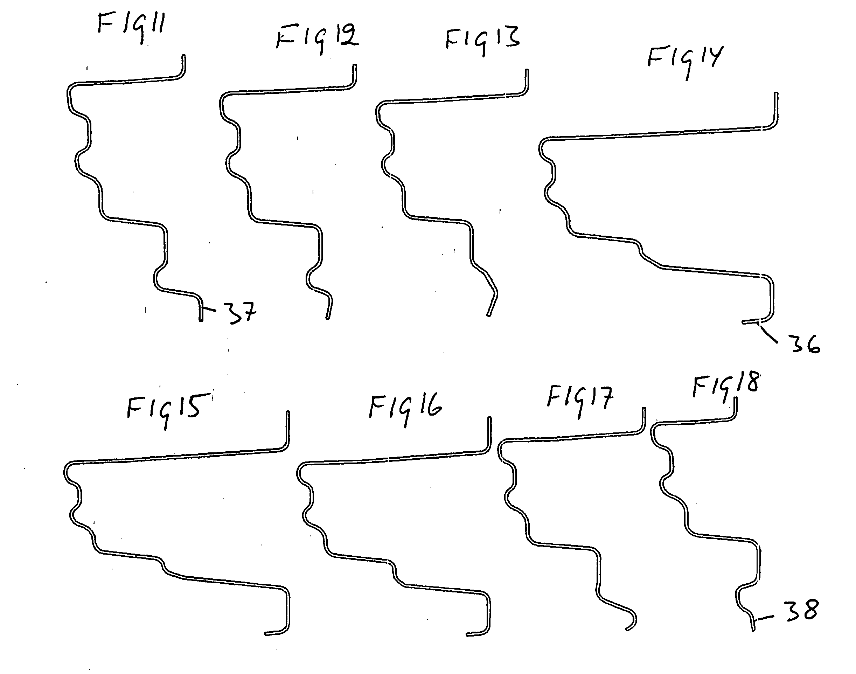

Figures 11-18 depict cross-sections of a modified beam which has a bent edge 36 on the web 13. This bent edge forms a new side flange 37 at the middle portion of the beam and new side flanges 38 at the ends of the beam.

This beam is otherwise similar to that depicted in Figures 1-10. Figure 11 corresponds to Figure 3, Figure 12 to Figure 4, and so on. The secondary U-sections 23,24 are formed in the same way.

## Claims

1. A bumper beam for a vehicle in the form of a U-profile with the profile open towards the vehicle, where the U-profile has attachment portions (14,15) with side flanges (16,17) which form attachment surfaces for fastening to the vehicle, **characterised in that** the profile depth decreases from the attachment portions (16,17) towards the middle portion of the beam, and the side flange (16) of at least one profile side transforms towards the middle portion of the beam into a secondary small U-section (23,24) which is open towards the vehicle.

2. A bumper beam according to claim 1, **characterised in that** said one of the side flanges (16) of the profile transforms to a secondary small U-section (24) also towards each of the ends of the beam.

3. A bumper beam according to claim 1 or 2, **characterised in that** the bumper beam makes a bow from the attachment portions to the middle on the side which has said secondary U-section (24)

4. A bumper beam according to any one of the foregoing claims, **characterised in that** the beam's U-profile has a central flange (11) and two webs (12, 13), and the central flange increases in width from the attachment portions (14,15) towards the middle portion.

5. A bumper beam according to claim 5, **characterised in that** the web on the side with said secondary U-section has, at the attachment portions (14,15), a step (20) which constitutes a deformation trigger (21).

6. A bumper beam according to claim 5, **characterised in that** said step (20) increases in size towards the middle portion and forms a transition to the secondary U-profile.

## Patentansprüche

1. Stoßfängerstange für ein Fahrzeug in Form eines U-Profils, das zum Fahrzeug hin offen ist und Befestigungsteile (14, 15) mit Seitenflanschen (16,17) hat, die Befestigungsflächen zur Befestigung am Fahrzeug bilden, **gekennzeichnet dadurch, dass** die Profiltiefe der Befestigungsteile (16,17) sich zum mittleren Teil der Stange hin verringert, und der Seitenflansch (16) von mindestens einer Profilseite zum mittleren Teil der Stange hin zu einem sekundären kleinen U-Querschnitt (23, 24) wird, der zum Fahrzeug hin offen ist.

2. Stoßfängerstange nach Anspruch 1, **gekennzeichnet dadurch, dass** einer der Seitenflansche (16) des Profils auch zu jedem der Enden der Stange hin zu einem sekundären kleinen U-Querschnitt (24) wird.

3. Stoßfängerstange nach Anspruch 1 oder 2, **gekennzeichnet dadurch, dass** die Stoßfängerstange von den Befestigungsteilen zur Mitte hin an der Seite, die besagten sekundären U-Querschnitt (24) hat, einen Bogen bildet.

4. Stoßfängerstange nach einem beliebigen der vorherigen Ansprüche, **gekennzeichnet dadurch, dass** das U-Profil der Stange einen zentralen Flansch (11) und zwei Stege (12,13) aufweist und der zentrale Flansch von den Befestigungsteilen (14, 15) zum mittleren Teilstück hin breiter wird.

5. Stoßfängerstange nach Anspruch 5, **gekennzeichnet dadurch, dass** der Steg an der Seite mit besagtem sekundären U-Querschnitt an den Befestigungsteilen (14, 15) einen Absatz (20) aufweist, der eine Soll-Verformungsstelle (21) bildet.

6. Stoßfängerstange nach Anspruch 5, **gekennzeichnet dadurch dass** besagter Absatz (20) zum Mittelteil hin größer wird und einen Übergang zu dem sekundären U-Profil bildet.

## Revendications

1. Poutre de pare-choc destinée à un véhicule sous la forme d'un profilé en U avec le profil ouvert vers le véhicule, où le profilé en U a des composants de fixation (14, 15) avec des brides latérales (16,17) qui forment des surfaces de fixation pour la fixation au véhicule, **caractérisée en ce que** la profondeur du profil décroît à partir des composants de fixation (16,17) vers la partie centrale de la barre, et que la bride latérale (16) d'au moins un côté du profil se transforme vers la partie centrale de la barre dans une petite section en U secondaire (23, 24) qui est ouverte vers le véhicule.

2. Poutre de pare-choc selon la revendication 1, **caractérisée en ce que** l'une des brides latérales (16) du profil se transforme dans une petite section à U secondaire (24) également vers chacune des extrémités de la barre.

3. Poutre de pare-choc selon la revendication 1 ou 2, **caractérisée en ce que** la poutre de pare-choc fait un arc à partir des composants de fixation jusqu'au milieu du côté qui a ladite section en U secondaire (24)

4. Poutre de pare-choc selon l'une quelconque des revendications précédentes, **caractérisée en ce que** le profilé en U de la barre a une bride centrale (11) et deux traverses (12,13), et la bride centrale augmente en largeur à partir des composants de fixation (14, 15) vers la partie centrale.

5. Poutre de pare-choc selon la revendication 5, **caractérisée en ce que** la traverse du côté avec ladite section en U secondaire a, sur les composants de fixation (14, 15), un talon (20) qui constitue une zone destinée à la déformation (21).

6. Poutre de pare-choc selon la revendication 5, **caractérisée en ce que** ledit talon (20) s'agrandit vers la partie centrale et forme une transition vers le profilé en U secondaire.
